# EUROPEAN PATENT SPECIFICATION

(11) **EP 3 744 461 B1**
(45) Date of publication and mention of the grant of the patent: **08.05.2024**
(21) Application number: 19756953.6
(22) Date of filing: 25.02.2019
(51) Int. Cl.: B23K 9/095, G09B 9/00, G09B 19/00, G09B 19/24

(54) **WELD OPERATION MEASUREMENT SYSTEM**
MESSSYSTEM FÜR SCHWEISSBETRIEB
SYSTÈME DE MESURE D'OPÉRATION DE SOUDAGE

(30) Priority: 26.02.2018 JP 2018031501
(43) Date of publication of application: 02.12.2020
(73) Proprietor: Hitachi, Ltd., Tokyo 100-8280 (JP)
(72) Inventor: MIYAGI, Masanori, Tokyo 100-8280 (JP); MURAKAMI, Hiroki, Tokyo 100-8280 (JP); HOSOYA, Kazumichi, Tokyo 100-8280 (JP); TANAKA, Akihide, Tokyo 100-8280 (JP); SHIMIZU, Masao, Tokyo 100-8280 (JP)
(74) Representative: Strehl Schübel-Hopf & Partner
(86) International application number: PCT/JP2019/006954
(87) International publication number: WO 2019/163977

(56) References cited:
- JP-A- 2009 069 954
- JP-A- 2009 500 178
- JP-A- 2011 167 756
- JP-A- 2012 254 477
- JP-A- 2013 202 618
- JP-A- 2015 225 214
- US-A1- 2014 134 580
- US-A1- 2016 125 762
- US-A1- 2016 375 524
- US-B2- 8 338 743

## Description

### Technical Field

The present invention relates to a welding operation measurement system that measures a welding operation.

### Background Art

With recent social circumstances, the manufacturing environment has changed significantly. For example, it has become difficult to maintain manufacturing skills due to an increase in overseas production, an increase in procured goods from abroad, a decrease in skilled technicians, and the like, so that quality control has been exposed to more severe conditions. As a conventional method for passing down a skill, a skill has been succeeded by direct teaching from a skilled technician. However, a means for conveying the skill is insufficient, and the teaching is often intuitive. Thus, it takes time to teach the skill, or the skill is inaccurately passed down, so that the skill may be lost without being completely passed down.

Meanwhile, approaches to measure and evaluate an experienced skill have been taken with the development of measurement techniques in recent years. As a method for solving the problem in the conventional skill transfer, an approach to measure and evaluate an operation of a target person using various measurement devices has been performed. There has been proposed a method for comparing measured data with data measured in the past to evaluate a quality and use a result of the evaluation in quality control and training of a welding operation.

PTL 1 discloses a method of measuring data on a welding environment including a welding target and behavior of a welder during a welding operation when manual welding is performed, extracting a feature amount of a welding state during welding from the measured data to determine a quality of a manually welded state, and transmitting a result of the determination to the welder to control a welding quality.

A System and method for welding and system clamp assembly is described in US 2016 / 012 576 2 A1. A time of flight camera for welding machine vision is described in US 2016 / 037 552 4 A1. An operation support device is described in JP 2009 069 954 A. A method and device for controlling robots for welding workpieces are described in US 8 338 743 B2. A system for welding training is described in US 2014 / 134 580 A1.

### Citation List

### Patent Literature

PTL 1: JP 2001-171140 A

### Summary of Invention

### Technical Problem

The method of PTL 1 describes that the movement is managed by acquiring the movement of the welder in three-dimensional coordinates, but does not describe a detailed method such as a measurement principle.

Further, when a shape of the welding target object is complicated, it is impossible to accurately measure positional relationship between the welding target object and the welder, and it is difficult to acquire relative information.

In view of the above, an object of the present invention is to provide a welding operation measurement system that can accurately measure a positional relationship between a welding target object and a welder and acquire accurate three-dimensional coordinate data of a shape of a work.

### Solution to Problem

In order to solve the above problems, the invention proposes welding operation measurement systems according to claims 1 and 4, respectively.

As the light irradiation unit, either a unit that emits light having a predetermined wavelength or a unit that emits light having a predetermined wavelength or a unit that emits light having a predetermined wavelength range may be used. Further, a self-luminous marker attached to the work and the torch may be used, instead of the light irradiation unit.

Further, when the unit that emits the light having the predetermined wavelength range is used as the light irradiation unit, it is preferable to provide a filter that extracts light of a specific wavelength and to use one that measures the light of the specific wavelength out of the light reflected from the marker as the three-dimensional coordinate measurement unit.

### Advantageous Effects of Invention

It is possible to provide the welding operation measurement system that can accurately measure the positional relationship between the welding target object and the welder and acquire the accurate three-dimensional coordinate data of the shape of the work.

### Brief Description of Drawings

[FIG. 1] FIG. 1 is an overall view illustrating one embodiment of a welding operation measurement system according to an embodiment of the present invention.
[FIG. 2A] FIG. 2A is an enlarged view around a torch according to the embodiment of the present invention.
[FIG. 2B] FIG. 2B is an enlarged view of the torch according to the embodiment of the present invention.
[FIG. 3] FIG. 3 is a schematic view illustrating an example of a method for acquiring coordinate data of a welding target object according to the embodiment of the present invention.
[FIG. 4] FIG. 4 is a table illustrating an example of marker coordinate data of the welding target object according to the embodiment of the present invention.
[FIG. 5] FIG. 5 is a graph illustrating a measurement result of welding operation data at welding time or a welding position.
[FIG. 6] FIG. 6 is a view illustrating another embodiment (quality control system) of the welding operation measurement system according to the embodiment of the present invention.
[FIG. 7A] FIG. 7A is a table illustrating a relationship between a quality and an average moving speed of a torch.
[FIG. 7B] FIG. 7B is a table illustrating a relationship between the quality and an angular velocity of the torch.
[FIG. 8A] FIG. 8A is a table illustrating a measurement result of an average moving speed of the torch during welding time.
[FIG. 8B] FIG. 8B is a graph illustrating a measurement result of the angular velocity of the torch during the welding time.
[FIG. 9] FIG. 9 is a diagram illustrating another embodiment (education system) of the welding operation measurement system according to the embodiment of the present invention.
[FIG. 10A] FIG. 10A is a table illustrating a training result of an average moving speed of a torch during welding time.
[FIG. 10B] FIG. 10B is a graph illustrating a training result of an angular velocity of the torch during the welding time.

### Description of Embodiments

Hereinafter, each embodiment will be described with reference to the drawings.

### [First Embodiment]

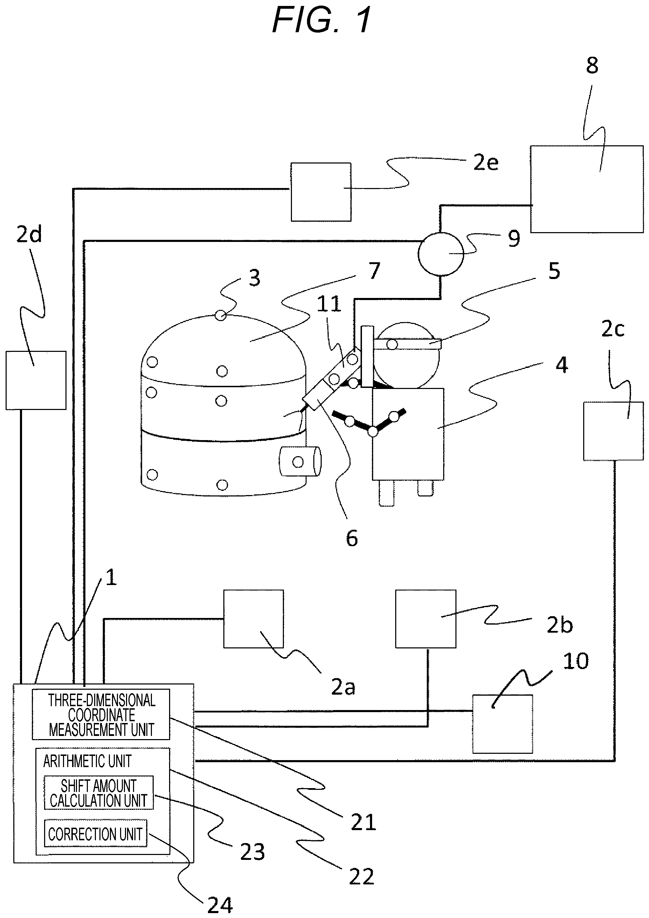

FIG. 1 is an overall view of a welding operation measurement system according to a first embodiment.

Reference sign 1 denotes a control unit (control device), reference signs 2a, 2b, 2c, 2d, and 2e represent a marker measurement camera, reference sign 3 denotes a marker, reference sign 4 denotes a welder, reference sign 5 denotes a light-shielding surface, reference sign 6 denotes a torch, reference sign 7 denotes a welding target object, reference sign 8 denotes a semi-automatic welding power supply, reference sign 9 denotes a current/voltage measurement device, reference sign 10 denotes a temperature/humidity/wind measurement device, and reference sign 11 denotes an absorption film. The control unit (control device) 1 is, for example, a computer including: an arithmetic processing device (for example, a CPU); a storage device that stores a program or data to be executed by the arithmetic processing device (for example, a semiconductor memory such as a ROM and a RAM, or a magnetic storage device such as an HDD, which corresponds to a "storage unit" to be described below), a display device (for example, a monitor or a touch panel) that displays a calculation result of the arithmetic processing device.

The operation of welding the welding target object 7 by the welder 4 who is a worker by semi-automatic welding is measured. The marker measurement cameras 2a, 2b, 2c, 2d, and 2e, which are light irradiation units, are arranged around the welder 4 and the welding target object 7. The marker measurement cameras 2a, 2b, 2c, 2d, and 2e can set light to have a wavelength of 350 nm to 11 um so as to avoid a light wavelength at the time of arc welding, and emit the light. In the present embodiment, light of 850 nm is applied. The marker 3 is attached to the welding target object 7 (work 18), the torch 6, the welder 4, the light-shielding surface 5, a filler metal 19, and the like, and may be one that reflects light or one that is self-luminous. In the present embodiment, a marker coated with a paint that reflects light is used. Note that the marker may be provided on at least the torch 6 and the welding target object 7 in the present invention, and more detailed coordinate data can be obtained by further providing the marker on the welder 4, the light-shielding surface 5, the filler metal 19, and the like. The marker measurement cameras 2a, 2b, 2c, 2d, and 2e, the current/voltage measurement device 9, the temperature/humidity/wind measurement device 10 are connected to the control unit 1. Operations of the respective measurement devices are controlled by the control unit 1, and operation data such as a measured average moving speed of the torch, a torch height, a weaving condition, a torch angle, a supply amount of the filler metal, an angle of an elbow having the torch, a head position and environmental data such as a current value, a voltage value, temperature, humidity, wind power are sent to the control unit 1, and stored as storage data in the storage unit in the control unit 1. Further, the control unit 1 has a function of displaying measured data.

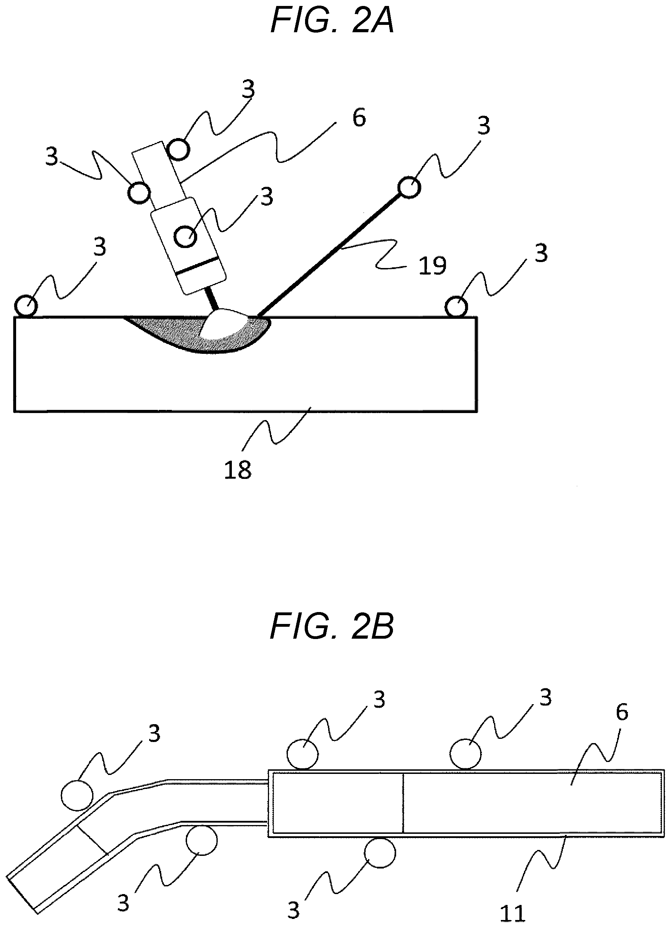

FIG. 2A is an enlarged view around the torch 6, and FIG. 2B is an enlarged view of the torch 6. The torch 6 is provided with a substance that absorbs light having a predetermined wavelength of 850 nm, that is, an absorption film 11 on the entire surface in this case. A plurality of the markers 3 are attached onto the absorption film 11, and light from the marker measurement cameras 2a, 2b, 2c, 2d, and 2e is reflected by the markers 3, and accurate positions of the markers 3 can be measured. The light emitted during arc welding includes light of 850 nm, and the light is reflected from places other than the markers 3 and measured. Therefore, when the absorption film 11 is attached to the torch, the reflection of light from places other than the marker 3 can be suppressed, noise can be suppressed, and a highly accurate measurement result can be obtained. As the welder 4 starts welding, a measurement start signal is sent from the control unit 1 to the respective measurement devices (the marker measurement cameras as the light irradiation devices, the current/voltage measurement device 9, and the temperature/humidity/wind measurement device 10), and measurement is started. The measured pieces of storage data are sequentially sent to the control unit 1 and recorded in the storage unit as described above.

Note that the storage unit also stores three-dimensional graphic data, which is input three-dimensional CAD data, and calculated three-dimensional coordinate data, which will be described later. Further, the storage unit is provided inside the control unit 1 in the above description, but may be provided outside the control unit 1.

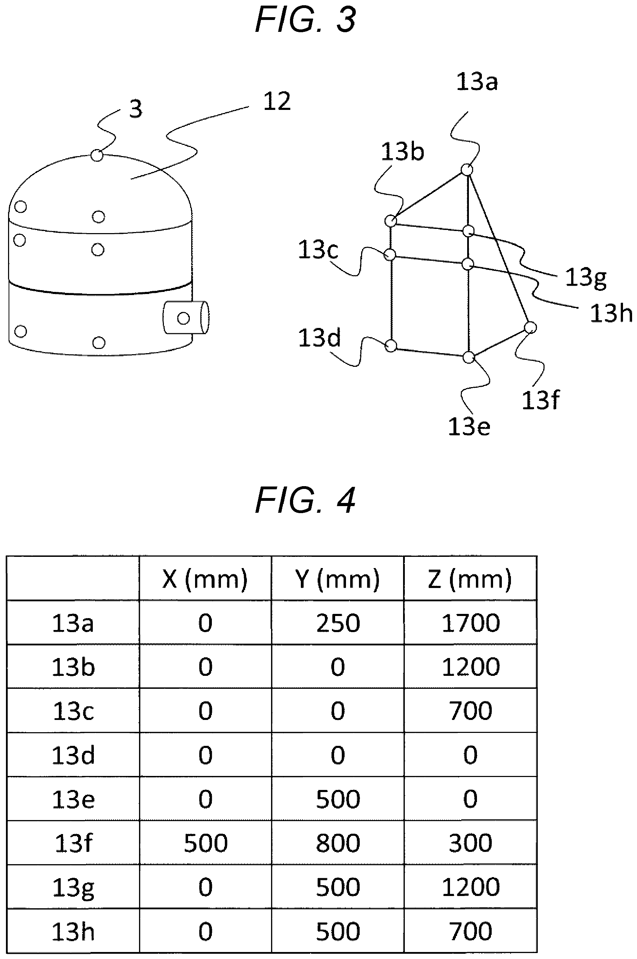

FIG. 3 illustrates a schematic view of a method for acquiring coordinate data of the welding target object 7 from three-dimensional drawing data and coordinate data of the marker 3 attached to the welding target object 7.

The control unit 1 includes: a three-dimensional coordinate measurement unit 21 that measures the light reflected from the markers 3 attached to the welding target object 7 (work 18) and the torch 6, which reflect the light emitted from the marker measurement cameras 2a, 2b, 2c, 2d, and 2e as the light irradiation devices, and calculates three-dimensional coordinate data of the work 18 and the torch 6; and an arithmetic unit 22 that converts a shape of the work 18 into coordinates based on three-dimensional graphic data and the three-dimensional coordinate data and generates coordinate data of the shape of the work 18. The arithmetic unit 22 includes: a shift amount calculation unit 23 that matches the input three-dimensional graphic data and the three-dimensional coordinate data of the work 18 and calculates a shift amount; and a correction unit 24 that corrects the coordinate data of the shape of the work 18 based on the calculated shift amount. The three-dimensional coordinate measurement unit 21, the shift amount calculation unit 23, and the correction unit 24 indicate functions of the program executed by the arithmetic processing unit of the control unit 1, which is the computer. Details will be described hereinafter.

Three-dimensional drawing data 12 of the welding target object 7 is three-dimensional CAD data that has been stored in advance or input. Three-dimensional coordinate data, which are marker coordinate data 13a, 13b, 13c, 13d, 13e, 13f, 13g, and 13h of the welding target object 7, are position coordinate data of the respective markers 3 illustrated in FIG. 4 measured by the marker measurement cameras 2a, 2b, 2c, 2d, and 2e and has XYZ coordinate data with a predetermined position as a reference. The control unit 1 has a database as a storage unit in which three-dimensional drawing data 12 of the welding target object 7_ is stored in advance, and can convert the shape of the welding target object 7 into coordinates based on the marker coordinate data 13a, 13b, 13c, 13d, 13e, 13f, 13g, and 13h by matching the three-dimensional drawing data 12 and the marker coordinate data 13a, 13b, 13c, 13d, 13e, 13f, 13g, and 13h indicating positions of the markers 3 attached to the welding target object 7_ using the shift amount calculation unit 23 of the control unit 1. Further, there is a case where the welding target object 7 and the three-dimensional drawing data 12 do not completely match due to deformation during manufacturing, that is, the three-dimensional coordinate data of the welding target object 7 and the input three-dimensional drawing data do not match. In this case, the correction unit 24 can predict a deformation amount using the matched data, that is, data on a shift amount (difference) between the three-dimensional drawing data 12 and the marker coordinate data 13a, 13b, 13c, 13d, 13e, 13f, 13g, and 13h, offset-correct a torch position obtained by a predetermined ideal torch operation, and present the corrected torch position to a welding worker.

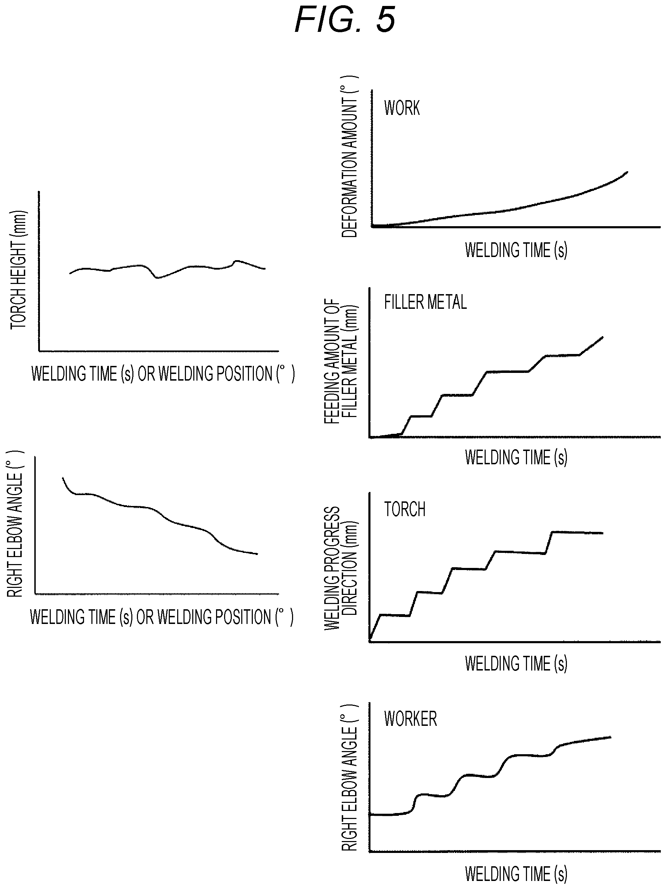

A measurement result (positional relationship) of welding operation data at welding time or a welding position as illustrated in FIG. 5 can be calculated based on the coordinate data of the welding target object 7 and the coordinate data of the marker 3 of the torch 6 and the welder 4. It is possible to calculate a height of the torch and an angle of a right elbow with respect to welding time or a welding position by calculating the coordinate data of the welding target object 7. The control unit 1 can calculate a position, a speed, an angle, a trajectory, an acceleration, an angular velocity, and the like based on the coordinate data obtained from each marker. That is, a welding operation of a skilled worker and a welding operation of a beginner can be acquired as data, and the welding operation can be quantitatively evaluated.

Specifically, a feeding amount of the filler metal, movement of the torch 6 in a welding progress direction, the deformation amount of the work, and the angle of the right elbow were calculated based on the coordinate data obtained by measuring the markers 3 attached to the torch 6, the work, the filler metal, and the worker. It was confirmed from the calculated feeding amount of the filler metal and movement of the torch 6 in the welding progress direction that the filler metal and the torch had a periodic operation pattern of repeating stop and moving.

Further, it was confirmed that the angle of the right elbow was increased in conjunction with the torch operation. Further, it was confirmed that the deformation amount increased over the welding time as a result of calculating the deformation amount of the work from the coordinates of the marker 3 attached to the work. Since the deformation amount is quantitatively evaluated on the spot, it is possible to offset the deformation amount in torch coordinates when measuring the next welding pass, and a relative position of the torch 6 with respect to the work can be measured with high accuracy. When the relative positional relationship is measured by attaching the marker 3 to the torch 6, the work, the filler metal, and the worker in this manner, it is possible to also evaluate a linked operation with high accuracy.

From the above description, the welding operation measurement system of the present embodiment can accurately measure the positional relationship between the work, which is the welding target object, and the torch provided with the marker possessed by the welder, that is, the positional relationship between the welding target object and the welder, and it is possible to provide the welding operation measurement system that acquires the accurate three-dimensional coordinate data of the shape of the work.

Although the semi-automatic welding has been described in the present embodiment, the measurement is similarly performed even in TIG welding and the like, and the measurement is similarly performed by attaching a marker to a filler metal even in the case of using the filler metal.

Further, the marker is recognized by emitting the light having the predetermined wavelength (850 nm) from the light irradiation unit in the present embodiment, but a light source having a wide wavelength range (predetermined wavelength range) may be used as the light irradiation unit. In such a case, a three-dimensional coordinate measurement unit preferably includes a filter that extracts light of a specific wavelength from reflected light and measures the light of the specific wavelength out of the light reflected from a marker attached to a work or a torch.

Further, when the self-luminous marker is used instead of the marker that reflects light, either a marker that emits light of a predetermined wavelength or a marker that emits light having a wide wavelength range (predetermined wavelength range) can be selected. When the latter, that is, the marker having the wider wavelength range is selected, it is preferable to use a filter that extracts light of a specific wavelength similarly to the reflective marker. Further, it is also possible to impart a filter function of reflecting light of a specific wavelength to the marker.

### [Second Embodiment]

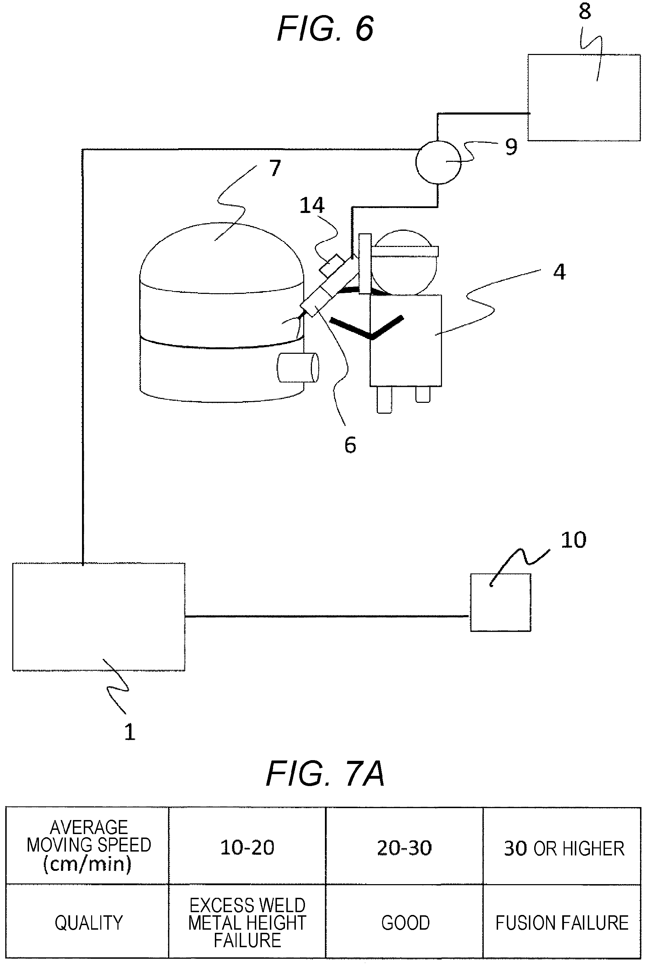

FIG. 6 illustrates an overall view when the welding operation measurement system according to the first embodiment is used for a quality control system.

It is possible to provide an inertial sensor 14, which is an acceleration angular velocity measurement device, on the torch 6 to measure a three-axis acceleration and a three-axis angular velocity. The welding method and the welding target object 7 are the same as those in the first embodiment.

Operation data, such as welding work operation data, welding state data, welding environment data, and welded portion quality data, acquired in the past is stored in advance and is compared with operation data, such as welding work operation data, welding state data, and welding environment data, newly measured by a measurement unit to determine a quality of a welded portion by a quality determination unit. This quality determination unit can also evaluate an operation level of a welder.

Note that the welding work operation data may be measured by a global positioning system, an indoor global positioning system, a stereo camera, or the like other than an acceleration/angular velocity/geomagnetic measurement devices such as the above-described inertial sensor 14.

Specifically, when welding the welding target object 7, with the configuration according to the first embodiment, storage data stored in the storage unit, such as measured marker coordinate data, data of a torch height relative to welding time or a welding position as illustrated in FIG. 5, data of an angle of an elbow having a torch (right elbow angle in FIG. 5) relative to welding time or a welding position, is used for the comparison with measured data of a torch height relative to welding time or a welding position and data of a right elbow angle relative to welding time or a welding position, and the quality control is performed using such results. This will be described hereinafter.

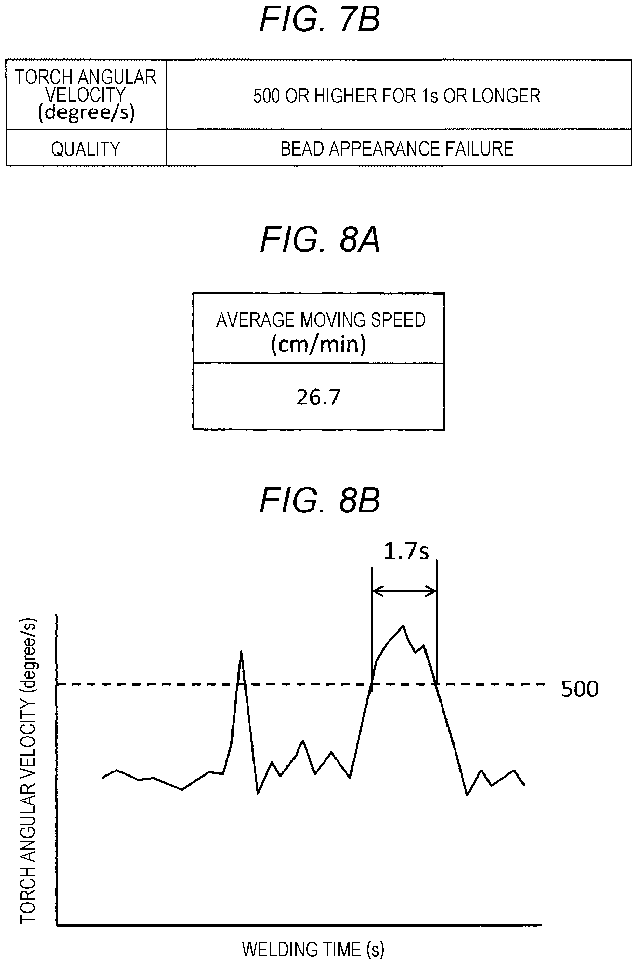

As a result of correlation analysis with the quality based on the storage data according to the first embodiment, an average moving speed of the torch and an angular velocity of the torch were extracted as feature amounts having a strong correlation with the quality. FIG. 7A illustrates a relationship between the quality and the average moving speed of the torch, and FIG. 7B illustrates the relationship between the quality and the angular velocity of the torch. The average moving speed (welding speed) of the torch is good if being about 20 to 30 cm/min. When the torch angular velocity is kept at 500 degree/s or higher for one second or longer, bead appearance becomes bad. Measurement results at the time of welding are illustrated in FIGS. 8A and 8B. As a result of data analysis performed by the control unit 1, the average moving speed was in a favorable range as illustrated in FIG. 8A, and was 26.7 cm/min. However, as illustrated in FIG. 8B, there was a region where the torch angular velocity continuously exceeded 500 degree/s for 1.7 seconds or longer. As a result of visually observing the appearance, the bead appearance of the relevant portion was disturbed, and it was determined that the appearance was bad. It is possible to estimate a type and an occurrence location of a failure immediately after welding. As described above, the feature amount having the strong correlation with the quality was extracted with the configuration of the first embodiment, and it has been confirmed that the quality can be controlled using a simpler sensor such as the inertial sensor. Although the average moving speed and the angular velocity of the torch are selected as the feature amounts in the present embodiment, the present invention is not limited thereto, and a torch height, a weaving condition, a torch angle, a supply amount of a filler metal, an angle of an elbow having the torch, and a head position may be used. Further, the inertial sensor is used as the sensor that measures the torch operation, but the present invention is not limited thereto.

### [Third Embodiment]

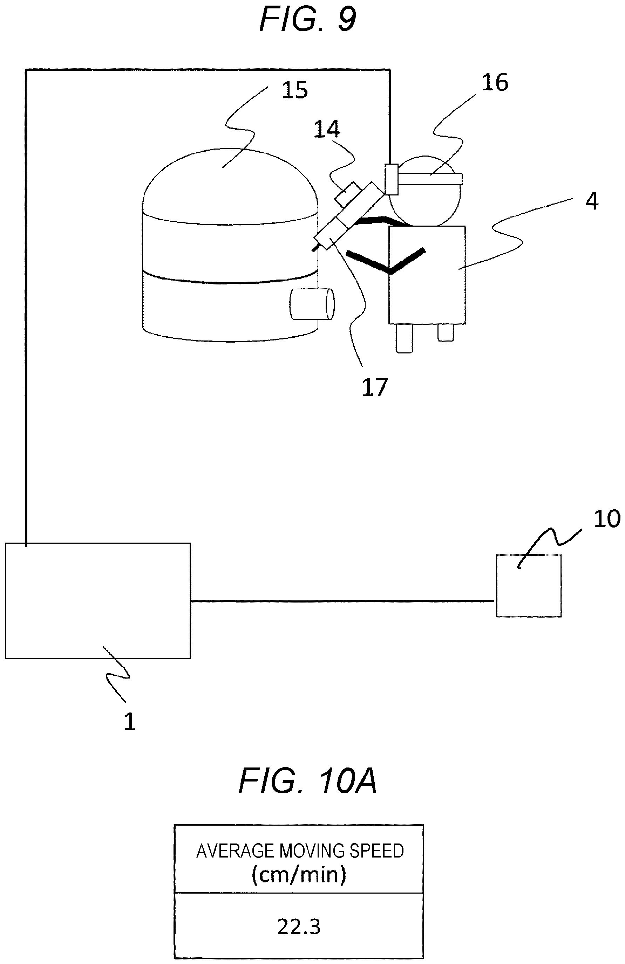

FIG. 9 illustrates an overall view when the welding operation measurement system of the first embodiment is used for an education system. Reference sign 15 denotes a welding-target-object-simulated part, reference sign 16 denotes a head-mounted display which is a display unit (display device), and reference sign 17 denotes a simulated torch.

The welding-target-object-simulated part 15 is the same as those in the first and second embodiments. When the welding operation measurement system described above is used, the feature amount analyzed in the first embodiment as having the strong correlation with the quality can be trained without actually performing welding, and the welding operation measurement system can be used as the education system.

The average moving speed and the angular velocity of the torch were selected as the feature amounts similarly to the second embodiment. Therefore, the inertial sensor 14, which is an operation data measurement unit capable of measuring and calculating these feature amounts, was attached to the torch similarly to the second embodiment (FIG. 6). A pattern for camera recognition is applied to the welding-target-object-simulated part 15, which is a welding target object, and the simulated torch 17, and a captured image of the pattern is acquired by an imaging unit (capturing device) such as a camera. Further, position information of the welding-target-object-simulated part 15 and the simulated torch 17 is obtained. As the imaging unit such as the camera, a camera installed on the head-mounted display 16 may be used. When the pattern is recognized with the camera of the head-mounted display 16, a video of a welding operation including the welding-target-object-simulated part 15 and the simulated torch 17 can be displayed on a screen of the head-mounted display.

Further, the imaging unit may be a stereo camera. When the stereo camera is used, it is possible to measure a positional relationship between the welding-target-object-simulated part 15 and the simulated torch 17, that is, to acquire three-dimensional distance information and position information. Note that the marker provided on the torch has been measured with the camera to acquire the accurate position information of the marker so far, it is possible to measure the positional relationship between the welding-target-object-simulated part 15 and the simulated torch 17 based on the acquired three-dimensional distance data without using the marker if the stereo camera is used.

The three-dimensional coordinate measurement unit 21 calculates three-dimensional coordinate data of the welding-target-object-simulated part 15, which is the welding target object, and the simulated torch 17 based on the position information acquired by the imaging unit and the various operation data described above. As also described in the first embodiment, the arithmetic unit 22 converts a shape of the welding-target-object-simulated part 15 into coordinates based on input three-dimensional graphic data and the three-dimensional coordinate data of the welding-target-object-simulated part 15, and generates coordinate data of the shape of the welding-target-object-simulated part 15.

The simulated torch 17 has a welding start switch, and is recognized as an energized state if the switch is in a pressed state. When a torch distal end is within a predetermined distance from the welding-target-object-simulated part 15 in the energized state, an arc is displayed on the head-mounted display, which is the display unit, and accordingly, a molten pool is displayed. When the welder 4 moves the simulated torch 17, the arc and the molten pool move accordingly. The control unit 1 refers to data stored in the past, and can reproduce the arc, the molten pool, a welding sound, a welding current/voltage in accordance with an operation of the torch. That is, on the head-mounted display as the display unit, it is possible to display the video of the welding operation reproducing the arc, the molten pool, the welding sound, the welding current/voltage in accordance with the operation of the torch based on the generated coordinate data of the shape of the welding-target-object-simulated part 15 and the operation data stored in advance.

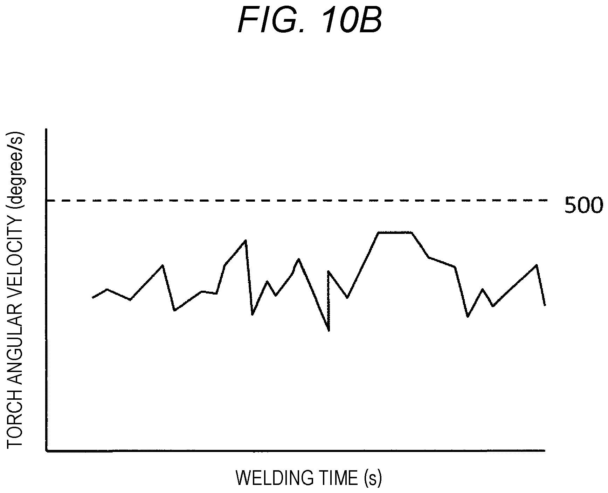

FIG. 10A illustrates a training result of an average moving speed of the torch during welding time, and FIG. 10B illustrates a training result of an angular velocity of the torch during the welding time.

As can be seen from FIGS.10A and 10B, the average moving speed of the torch and the angular velocity of the torch satisfy ideal predetermined ranges (operating ranges of a skilled worker) stored in advance, and good welding has been obtained during the torch operation. In this manner, the welder can receive welding training on the torch operation that needs to be trained safely without consuming the welding target object.

In the present system, it is possible to store the accurate operation data, such as the measured marker coordinate data, the data of the torch height relative to the welding time or welding position, and the data of the right elbow angle relative to the welding time or welding position, and thus, it is possible to refer to training history and control an operation skill level.

Although the education system has been constructed using the virtual system in the present embodiment, it is also possible to perform training while actually performing welding using actual welding target object and torch.

In the present invention, it is possible to provide the welding operation measurement system that can accurately digitize the welding operation, efficiently carry out a skill transfer by utilizing such numerical data for the education systems or the quality control, improve the quality of manufacturing, and contribute to reduction of a failure rate.

### Reference Signs List

- 1: control unit
- 2a, 2b, 2c, 2d, 2e: marker measurement camera
- 3: marker
- 4: welder
- 5: light-shielding surface
- 6: torch
- 7: welding target object
- 8: welding power supply
- 9: welding current/voltage measurement device
- 10: temperature/humidity/wind measurement device
- 11: absorption film

## Claims

1. A welding operation measurement system comprising:
a light irradiation unit that emits light; and
a three-dimensional coordinate measurement unit (2a - 2d)
**characterized in that** said three-dimensional coordinate measurement unit measures light reflected from a plurality of markers (3) attached to a welding target object (7) and a torch (6) and calculates three-dimensional coordinate data of the welding target object (7) and the torch (6), the marker (3) reflecting the emitted light and **in that** the system includes
an arithmetic unit (1) that converts a shape of the welding target object (7) into coordinates based on input three-dimensional graphic data and the three-dimensional coordinate data of the welding target object (7) and generates coordinate data of a shape of the welding target object (7).

2. The welding operation measurement system according to claim 1, wherein
the light irradiation unit emits light having a predetermined wavelength range, and
the three-dimensional coordinate measurement unit includes a filter that extracts light of a specific wavelength, and measures the light of the specific wavelength out of the light reflected from the markers (3).

3. The welding operation measurement system according to claim 1, wherein
the light irradiation unit emits light having a predetermined wavelength.

4. A welding operation measurement system comprising:
a three-dimensional coordinate measurement unit
and **characterized in that** said three-dimensional coordinate measurement unit measures light emitted from a plurality of markers, which are attached to a welding target object (7) and a torch and emit the light, and calculates three-dimensional coordinate data of the welding target object (7) and the torch and **in that** the system includes
an arithmetic unit that converts a shape of the welding target object (7) into coordinates based on input three-dimensional graphic data and the three-dimensional coordinate data of the welding target object (7) and generates coordinate data of the shape of the welding target object (7).

5. The welding operation measurement system according to claim 1, wherein
the arithmetic unit includes:
a shift amount calculation unit that matches the input three-dimensional graphic data and the three-dimensional coordinate data of the welding target object (7) and calculates a shift amount; and
a correction unit that corrects coordinate data of a shape of the welding target object (7) based on the calculated shift amount.

6. The welding operation measurement system according to claim 1, wherein
the three-dimensional coordinate measurement unit measures light reflected from markers attached to the welding target object (7), the torch, a filler metal, and a worker, and calculates the three-dimensional coordinate data of the welding target object (7), the torch, the filler metal, and the worker.

7. The welding operation measurement system according to claim 5, wherein
the correction unit predicts a deformation amount based on the shift amount, and offset-corrects a torch position obtained by a predetermined ideal torch operation based on the deformation amount.

8. The welding operation measurement system according to claim 5, further comprising
a display unit that displays the coordinate data of the shape of the welding target object (7) corrected by the correction unit.

9. The welding operation measurement system according to claim 3, wherein
the torch is provided with a substance that absorbs a predetermined wavelength of the light emitted from the light irradiation unit.

10. The welding operation measurement system according to claim 1, wherein
a wavelength of the light emitted from the light irradiation unit is 350 nm to 11 µm.

11. The welding operation measurement system according to claim 1, further comprising
a storage unit that stores the calculated three-dimensional coordinate data of the welding target object (7) and the torch.

12. The welding operation measurement system according to claim 1, further comprising:
a measurement unit that measures operation data at welding time or a welding position; and
a quality determination unit that determines a quality of a welded portion based on operation data stored in advance and the operation data measured by the measurement unit.

13. The welding operation measurement system according to claim 12, wherein
the operation data is at least one data of an average moving speed of the torch, a height of the torch, a weaving condition, an angle of the torch, a supply amount of a filler metal, an angle of an elbow having the torch, and a head position, and the operation data stored in advance is operation data when a skilled worker performed welding in past.

14. A welding operation measurement system according to claim 4, further comprising:
a simulated torch (17);
an operation data measurement unit (14) that measures operation data;
an imaging unit that images a welding target object (7) and the simulated torch (17), and acquires position information;
a display unit (16) that displays an image captured by the imaging unit;
wherein the three-dimensional coordinate measurement unit (21) calculates three-dimensional coordinate data of the welding target object (7) and the simulated torch based on the operation data and the position information; and
wherein the display unit (16) displays a video of a welding operation generated from the generated coordinate data of the shape of the welding target object and operation data stored in advance.

15. The welding operation measurement system according to claim 14, wherein
the operation data is at least one data of an average moving speed of the torch, a height of the torch (17), a weaving condition, an angle of the torch (17), a supply amount of a filler metal, an angle of an elbow having the torch (17), and a head position, and the operation data stored in advance is operation data when a skilled worker performed welding previously.

16. The welding operation measurement system according to claim 14, wherein
the video of the welding operation displayed on the display unit is a video that reproduces an arc and a molten pool in accordance with an operation of the simulated torch (17).

## Patentansprüche

1. System zur Messung eines Schweißvorgangs, umfassend:
eine Lichtbestrahlungseinheit, die Licht emittiert; und
eine dreidimensionale Koordinatenmesseinheit (2a - 2d);
**dadurch gekennzeichnet, dass** die dreidimensionale Koordinatenmesseinheit Licht misst, das von einer Vielzahl von Markierungen (3) reflektiert wird, die an einem Schweißzielobjekt (7) und einem Brenner (6) angebracht sind, und dreidimensionale Koordinatendaten des Schweißzielobjekts (7) und des Brenners (6) berechnet, wobei die Markierung (3) das emittierte Licht reflektiert, und dadurch, dass das System
eine arithmetische Einheit (1) umfasst, die eine Form des Schweißzielobjekts (7) auf der Grundlage von eingegebenen dreidimensionalen graphischen Daten und den dreidimensionalen Koordinatendaten des Schweißzielobjekts (7) in Koordinaten umwandelt und Koordinatendaten einer Form des Schweißzielobjekts (7) erzeugt.

2. System zur Messung des Schweißvorgangs nach Anspruch 1, bei dem
die Lichtbestrahlungseinheit Licht mit einem vorbestimmten Wellenlängenbereich emittiert, und
die dreidimensionale Koordinatenmesseinheit einen Filter enthält, der Licht einer bestimmten Wellenlänge extrahiert, und das Licht der bestimmten Wellenlänge aus dem von den Markierungen (3) reflektierten Licht misst.

3. System zur Messung des Schweißvorgangs nach Anspruch 1, wobei
die Lichtbestrahlungseinheit Licht mit einer vorbestimmten Wellenlänge emittiert.

4. System zur Messung eines Schweißvorgangs, umfassend:
eine dreidimensionale Koordinatenmesseinheit;
**dadurch gekennzeichnet, dass** die dreidimensionale Koordinatenmesseinheit Licht misst, das von einer Vielzahl von Markierungen ausgesendet wird, die an einem Schweißzielobjekt (7) und einem Brenner angebracht sind und das Licht aussenden, und dreidimensionale Koordinatendaten des Schweißzielobjekts (7) und des Brenners berechnet, und dass das System eine arithmetische Einheit enthält, die eine Form des Schweißzielobjekts (7) basierend auf eingegebenen dreidimensionalen graphischen Daten und den dreidimensionalen Koordinatendaten des Schweißzielobjekts (7) in Koordinaten umwandelt, und Koordinatendaten der Form des Schweißzielobjekts (7) erzeugt.

5. System zur Messung des Schweißvorgangs nach Anspruch 1, bei dem
die Recheneinheit umfasst:
eine Verschiebungsbetragsberechnungseinheit, die die eingegebenen dreidimensionalen Grafikdaten und die dreidimensionalen Koordinatendaten des Schweißzielobjekts (7) abgleicht und einen Verschiebungsbetrag berechnet; und
eine Korrektureinheit, die Koordinatendaten einer Form des Schweißzielobjekts (7) basierend auf dem berechneten Verschiebungsbetrag korrigiert.

6. System zur Messung des Schweißvorgangs nach Anspruch 1, wobei
die dreidimensionale Koordinatenmesseinheit Licht misst, das von an dem Schweißzielobjekt (7), dem Brenner, einem Zusatzwerkstoff und einem Arbeiter angebrachten Markierungen reflektiert wird, und die dreidimensionalen Koordinatendaten des Schweißzielobjekts (7), des Brenners, des Zusatzwerkstoffs und des Arbeiters berechnet.

7. System zur Messung des Schweißvorgangs nach Anspruch 5, wobei
die Korrektureinheit einen Deformationsbetrag auf der Grundlage des Verschiebungsbetrags vorhersagt und eine durch einen vorbestimmten idealen Brennerbetrieb erhaltene Brennerposition auf der Grundlage des Deformationsbetrags versetzt korrigiert.

8. System zur Messung des Schweißvorgangs nach Anspruch 5, das ferner Folgendes umfasst
eine Anzeigeeinheit, die die von der Korrektureinheit korrigierten Koordinatendaten der Form des Schweißzielobjekts (7) anzeigt.

9. System zur Messung des Schweißvorgangs nach Anspruch 3, wobei
der Brenner mit einer Substanz versehen ist, die eine vorbestimmte Wellenlänge des von der Lichtbestrahlungseinheit emittierten Lichts absorbiert.

10. System zur Messung des Schweißvorgangs nach Anspruch 1, bei dem
eine Wellenlänge des von der Lichtbestrahlungseinheit emittierten Lichts 350 nm bis 11 µm beträgt.

11. System zur Messung des Schweißvorgangs nach Anspruch 1, das ferner Folgendes umfasst
eine Speichereinheit, die die berechneten dreidimensionalen Koordinatendaten des Schweißzielobjekts (7) und des Brenners speichert.

12. System zur Messung des Schweißvorgangs nach Anspruch 1, ferner umfassend:
eine Messeinheit, die Betriebsdaten zum Schweißzeitpunkt oder an einer Schweißposition misst; und
eine Qualitätsbestimmungseinheit, die eine Qualität eines geschweißten Abschnitts auf der Grundlage von im Voraus gespeicherten Betriebsdaten und den von der Messeinheit gemessenen Betriebsdaten bestimmt.

13. System zur Messung des Schweißvorgangs nach Anspruch 12, wobei
die Betriebsdaten mindestens eine der folgenden Daten sind: eine durchschnittliche Bewegungsgeschwindigkeit des Brenners, eine Höhe des Brenners, ein Webzustand, ein Winkel des Brenners, eine Zuführungsmenge eines Zusatzmetalls, ein Winkel eines Winkels mit dem Brenner und eine Kopfposition, und die im Voraus gespeicherten Betriebsdaten Betriebsdaten sind, wenn ein Facharbeiter in der Vergangenheit geschweißt hat.

14. System zur Messung des Schweißvorgangs nach Anspruch 4, ferner umfassend:
einen simulierten Brenner (17);
eine Betriebsdaten-Messeinheit (14), die Betriebsdaten misst;
eine Abbildungseinheit, die ein Schweißzielobjekt (7) und den simulierten Brenner (17) abbildet und Positionsinformationen erfasst;
eine Anzeigeeinheit (16), die ein von der Abbildungseinheit aufgenommenes Bild anzeigt;
wobei die dreidimensionale Koordinatenmesseinheit (21) dreidimensionale Koordinatendaten des Schweißzielobjekts (7) und des simulierten Brenners basierend auf den Betriebsdaten und den Positionsinformationen berechnet; und
wobei die Anzeigeeinheit (16) ein Video eines Schweißvorgangs anzeigt, das aus den erzeugten Koordinatendaten der Form des Schweißzielobjekts und den im Voraus gespeicherten Betriebsdaten erzeugt wird.

15. System zur Messung des Schweißvorgangs nach Anspruch 14, wobei
die Betriebsdaten mindestens eine der folgenden Daten sind: eine durchschnittliche Bewegungsgeschwindigkeit des Brenners, eine Höhe des Brenners (17), ein Webzustand, ein Winkel des Brenners (17), eine Zuführungsmenge eines Zusatzmetalls, ein Winkel eines Winkels, der den Brenner (17) hat, und eine Kopfposition, und die im Voraus gespeicherten Betriebsdaten Betriebsdaten sind, wenn ein Facharbeiter vorher geschweißt hat.

16. System zur Messung des Schweißvorgangs nach Anspruch 14, wobei
das Video des Schweißvorgangs, das auf der Anzeigeeinheit angezeigt wird, ein Video ist, das einen Lichtbogen und ein Schmelzbad gemäß einem Betrieb des simulierten Brenners (17) wiedergibt.

## Revendications

1. Système de mesure d'opération de soudage comprenant :
une unité d'irradiation de lumière qui émet une lumière ; et
une unité (2a - 2d) de mesure de coordonnées tridimensionnelles,
**caractérisé en ce que** ladite unité de mesure de coordonnées tridimensionnelles mesure une lumière réfléchie depuis une pluralité de marqueurs (3) fixés à un objet (7) cible de soudage et à un chalumeau (6) et calcule des données de coordonnées tridimensionnelles de l'objet (7) cible de soudage et du chalumeau (6), le marqueur (3) reflétant la lumière émise et **en ce que** le système inclut
une unité arithmétique (1) qui convertit une forme de l'objet (7) cible de soudage en coordonnées sur la base de données graphiques tridimensionnelles entrées et des données de coordonnées tridimensionnelles de l'objet (7) cible de soudage et génère des données de coordonnées d'une forme de l'objet (7) cible de soudage.

2. Système de mesure d'opération de soudage selon la revendication 1, dans lequel
l'unité d'irradiation de lumière émet une lumière ayant une plage de longueur d'onde prédéterminée, et
l'unité de mesure de coordonnées tridimensionnelles inclut un filtre qui extrait une lumière d'une longueur d'onde spécifique, et mesure la lumière de la longueur d'onde spécifique extraite de la lumière réfléchie depuis les marqueurs (3).

3. Système de mesure d'opération de soudage selon la revendication 1, dans lequel
l'unité d'irradiation de lumière émet une lumière ayant une longueur d'onde prédéterminée.

4. Système de mesure d'opération de soudage comprenant :
une unité de mesure de coordonnées tridimensionnelles,
**caractérisé en ce que** ladite unité de mesure de coordonnées tridimensionnelles mesure une lumière émise depuis une pluralité de marqueurs, qui sont fixés à un objet (7) cible de soudage et à un chalumeau et émettent la lumière, et calcule des données de coordonnées tridimensionnelles de l'objet (7) cible de soudage et du chalumeau, et **en ce que** le système inclut
une unité arithmétique qui convertit une forme de l'objet (7) cible de soudage en coordonnées sur la base de données graphiques tridimensionnelles entrées et des données de coordonnées tridimensionnelles de l'objet (7) cible de soudage et génère des données de coordonnées d'une forme de l'objet (7) cible de soudage.

5. Système de mesure d'opération de soudage selon la revendication 1, dans lequel
l'unité arithmétique inclut :
une unité de calcul de quantité de décalage qui correspond aux données graphiques tridimensionnelles entrées et aux données de coordonnées tridimensionnelles de l'objet (7) cible de soudage et calcule une quantité de décalage ; et
une unité de correction qui corrige des données de coordonnées d'une forme de l'objet (7) cible de soudage sur la base de la quantité de décalage calculée.

6. Système de mesure d'opération de soudage selon la revendication 1, dans lequel
l'unité de mesure de coordonnées tridimensionnelles mesure une lumière réfléchie depuis des marqueurs fixés à l'objet (7) cible de soudage, au chalumeau, à un métal de charge, et à un ouvrier, et calcule les données de coordonnées tridimensionnelles de l'objet (7) cible de soudage, du chalumeau, du métal de charge, et de l'ouvrier.

7. Système de mesure d'opération de soudage selon la revendication 5, dans lequel
l'unité de correction prédit une quantité de déformation sur la base de la quantité de décalage, et corrige par compensation une position de chalumeau obtenue par une opération idéale prédéterminée de chalumeau sur la base de la quantité de déformation.

8. Système de mesure d'opération de soudage selon la revendication 5, comprenant en outre
une unité d'affichage qui affiche les données de coordonnées de la forme de l'objet (7) cible de soudage corrigées par l'unité de correction.

9. Système de mesure d'opération de soudage selon la revendication 3, dans lequel
le chalumeau est prévu avec une substance qui absorbe une longueur d'onde prédéterminée de la lumière émise depuis l'unité d'irradiation de lumière.

10. Système de mesure d'opération de soudage selon la revendication 1, dans lequel
une longueur d'onde de la lumière émise depuis l'unité d'irradiation de lumière est 350 nm à 11 µm.

11. Système de mesure d'opération de soudage selon la revendication 1, comprenant en outre
une unité de stockage qui stocke les données de coordonnées tridimensionnelles calculées de l'objet (7) cible de soudage et du chalumeau.

12. Système de mesure d'opération de soudage selon la revendication 1, comprenant en outre
une unité de mesure qui mesure des données opérationnelles à un moment de soudage ou à une position de soudage ; et
une unité de détermination de qualité qui détermine une qualité d'une partie soudée sur la base de données opérationnelles stockées au préalable et des données opérationnelles mesurées par l'unité de mesure.

13. Système de mesure d'opération de soudage selon la revendication 12, dans lequel
les données opérationnelles sont au moins une donnée parmi une vitesse moyenne de déplacement du chalumeau, une hauteur du chalumeau, une condition de balancement, un angle du chalumeau, une quantité d'alimentation d'un métal de charge, un angle d'un coude ayant le chalumeau, et une position de tête, et les données opérationnelles stockées au préalable sont des données opérationnelles lorsqu'un ouvrier qualifié a exécuté le soudage dans le passé.

14. Système de mesure d'opération de soudage selon la revendication 4, comprenant en outre
un chalumeau simulé (17) ;
une unité (14) de mesure de données opérationnelles qui mesure des données opérationnelles ;
une unité d'imagerie qui image un objet (7) cible de soudage et le chalumeau simulé (17), et acquiert des informations de position ;
une unité (16) d'affichage qui affiche une image capturée par l'unité d'imagerie ;
dans lequel l'unité (21) de mesure de coordonnées tridimensionnelles calcule des données de coordonnées tridimensionnelles de l'objet (7) cible de soudage et du chalumeau simulé sur la base des données opérationnelles et des informations de position ; et
dans lequel l'unité (16) d'affichage affiche une vidéo d'une opération de soudage générée à partir des données de coordonnées générées de la forme de l'objet cible de soudage et de données opérationnelles stockées au préalable.

15. Système de mesure d'opération de soudage selon la revendication 14, dans lequel
les données opérationnelles sont au moins une donnée parmi une vitesse moyenne de déplacement du chalumeau, une hauteur du chalumeau (17), une condition de balancement, un angle du chalumeau (17), une quantité d'alimentation d'un métal de charge, un angle d'un coude ayant le chalumeau (17), et une position de tête, et les données opérationnelles stockées au préalable sont des données opérationnelles lorsqu'un ouvrier qualifié a exécuté le soudage précédemment.

16. Système de mesure d'opération de soudage selon la revendication 14, dans lequel
la vidéo de l'opération de soudage affichée sur l'unité d'affichage est une vidéo qui reproduit un arc et un bain de fusion conformément à une opération du chalumeau simulé (17).
